# EUROPÄISCHE PATENTSCHRIFT

(11) **EP 1 980 455 B1**
(45) Veröffentlichungstag und Bekanntmachung des Hinweises auf die Patenterteilung: **05.10.2016**
(21) Anmeldenummer: 08153411.7
(22) Anmeldetag: 27.03.2008
(51) Int. Cl.: B60R 21/215

(54) **Verfahren zur Herstellung einer Airbagabdeckung**
Procedure for manufacturing an airbag cover
Procédé pour la réalisation d'un couvercle de sac gonflable

(30) Priorität: 13.04.2007 DE 102007017602
(43) Veröffentlichungstag der Anmeldung: 15.10.2008
(73) Patentinhaber: Lisa Dräxlmaier GmbH, 84137 Vilsbiburg (DE)
(72) Erfinder: Aichner, Rudolf, 84178, Kröning-Kirchberg (DE); Schlemmer, Christian, 84034, Landshut (DE)

(56) Entgegenhaltungen:
- EP-A1- 1 705 076
- EP-A1- 1 745 989
- DE-A1- 19 944 371
- JP-A- H1 178 751
- JP-A- H11 170 951

## Beschreibung

### Gebiet der Erfindung

Die Erfindung betrifft ein Verfahren zur Herstellung einer eine Lederschicht aufweisenden Airbagabdeckung, insbesondere zur Verwendung in einem Kraftfahrzeug, mit einer partiellen Schwächung zur Einleitung eines Risses und/oder dessen Ausbreitung entlang einer vorab definierten Strecke.

### Stand der Technik

Airbagdeckungen insbesondere zur Verwendung in einem Kraftfahrzeug werden üblicherweise im Bereich der Instrumententafel oder im Lenkrad sowie den Türen, Sitzen oder in Bereichen des Dachhimmels des Kraftfahrzeugs verwendet und sollen zum einen eine ansprechende Optik aufweisen und zum anderen die Entfaltung des Airbags im Auslösefall im Wesentlichen nicht behindern oder stören.

Gerade in Kraftfahrzeugen der gehobenen Mittelklasse und Oberklasse wird besonderer Wert auf das optische Erscheinungsbild derartiger Airbagabdeckungen gelegt. Dies führte in der Vergangenheit dazu, dass Airbagabdeckungen vom Fahrzeuginsassen nicht mehr erkennbar hergestellt wurden und sich vollständig gerade im Bereich der Instrumententafel eines Kraftfahrzeugs in die umgebenden Bereiche integrieren lassen sollen. Dennoch sollten auch in diesen Fällen die durchgehend ausgebildeten Dekormaterialien entlang vorab definierter Linien aufreißen und so das Wegklappen von Abdeckungen oder Abdeckungsteilen sowie die vollständige Entfaltung des Airbags gewährleisten.

Wo derartige Aufreißlinien in der Vergangenheit vernäht wurden, setzte sich anschließend ein rückseitiges Einschneiden mittels Messern durch. Nachteilig an derartigen Varianten war aber, dass bei den auf solche Airbagabdeckungen einwirkenden Temperaturwechseln und verschiedenen Bestrahlungsintensitäten die Aufreißlinien sich zumindest nach Ablauf einiger Zeit abzeichneten und das Ziel einer dauerhaften Unsichtbarkeit der Airbagabdeckungen innerhalb des Dekormaterials nicht sichergestellt werden konnte.

Beispiele für sichtbare Airbag-Abdeckungen finden sich beispielsweise in der DE 195 16 230 C2, bei der der Risseinleitungs- und Ausbreitungsbereich in der Airbagabdeckung durch eine Materialeinschnürung sowohl im Bereich des im Wesentlichen formstabilen Dekorträgers als auch in dem darüber angeordneten Dekormaterial verwirklicht ist.

Beispielsweise in der EP 07 116 27 B1 wurde darüber hinaus eine Vorrichtung sowie ein Verfahren offenbart, die Einschnitte in der Airbagabdeckung von der dem Fahrzeuginsassen abgewandten Seite aus als Reihe zueinander ausgerichteter Sacklöcher mittels Laserstrahlen einzubringen, um hierdurch Aufreißlinien in einem Schichtverbund ausbilden zu können. Ein Laserstrahl, der auch die oberste Schicht des Dekormaterials zumindest teilweise durchdringen sollte, musste jedoch eine solch hohe Leistung aufweisen, dass er sämtliche darunter angeordneten Schichten ebenfalls durchdringen konnte. Der Energieeintrag in die gesamte Airbagabdeckung war daher so hoch, dass Aufschmelzungen zumindest von Teilbereichen sowie Abdampfungen von Material nicht verhindert werden konnten und hierdurch das Erscheinungsbild der Airbagabdeckung nicht in der gewünschten Weise dauerhaft gewährleistet werden konnte. In denjenigen Fällen, wo der Laser jedoch nicht auch die oberste Dekormaterial-Schicht schwächt, wirkte der Entfaltung des Airbags eine zu große Kraft entgegen, so dass die vollständige und ungehinderte Entfaltung des Airbags nicht sichergestellt werden konnte.

Die Schwierigkeit bei der Regelung und Steuerung derartiger Laser werden beispielhaft in der DE 196 36 429 C1 beschrieben.

Die Notwendigkeit, möglichst niedrige Energieleistungen bei der Einbringung von Sacklöchern oder Durchgangslöchern in Dekormaterialien aufzubringen, wird insbesondere bei Verwendung von Leder oder lederähnlichen Materialien noch vergrößert, da Leder aufgrund der Tatsache, dass es sich hierbei um einen Naturstoff handelt, lokale Eigenschaftsunterschiede und Anisotropien beispielsweise in Bezug auf Dehnverhalten, Materialdichte und dergleichen aufweist. So ist abhängig von der Narbung des Leders zu gewährleisten, dass eine angestrebte Restwandstärke des Ledermaterials auch in den Bereichen sichergestellt ist, in denen die Narbung des Leders zu besonders tiefen Einschnitten von der Sichtseite aus führt. Dies wird vom Stand der Technik regelmäßig nicht mit der gewünschten Zuverlässigkeit und Sicherheit gewährleistet.

Die EP 1 745 989 A1 beschreibt ein Verfahren mit den Merkmalen im Oberbegriff von Anspruch 1. Die EP 1 705 076 A1 beschreibt ein Kraftfahrzeugverkleidungsteil mit Schwächungsstellen für eine Airbag-Entfaltungsöffnung. Die JP 11-078751 A beschreibt eine Airbageinrichtung mit einer Airbagklappe aus Kunststoff. Die Airbagklappe weist eine Bruchstelle mit reduzierter Dicke auf.

### Aufgabe der Erfindung

Es war daher eine Aufgabe der Erfindung, ein Verfahren zur Herstellung einer eine Lederschicht aufweisenden Airbagabdeckung mit einer partiellen Schwächung zur Verfügung zu stellen, durch das sichergestellt werden kann, dass Risse an vorab definierten Stellen eingeleitet und sich entlang vorab definierter Strecken ausbreiten und somit eine sichere und ungehinderte Entfaltung des Airbags im Auslösefall gewährleistet wird. Gleichzeitig soll bei Anwendung des erfindungsgemäßen Verfahrens auch gewährleistet werden, dass sich in das Ledermaterial eingebrachte Schwächungen dauerhaft nicht in der Airbagabdeckung abzeichnen.

Diese Aufgabe wird in erfindungsgemäßer Weise durch das Verfahren mit den Merkmalen des Anspruchs 1 gelöst.

Vorteilhafte Ausgestaltungen dieses erfindungsgemäßen Verfahrens sind in den abhängigen Ansprüchen 2 bis 18 dargestellt.

Das erfindungsgemäße Verfahren zeichnet sich dadurch aus, dass in einem ersten Schritt ein Schärfungsbereich in die Lederschicht eingebracht wird und hierdurch eine Restdicke der Lederschicht zumindest in Teilbereichen eingestellt wird. In einem zweiten, darauf folgenden Schritt wird in den vorab hergestellten Schärfungsbereichen wenigstens ein weiterer Einschnitt in die Lederschicht eingebracht, um hierdurch die örtlich begrenzte Schwächung des Ledermaterials zu verstärken. In einem weiteren Schritt des erfindungsgemäßen Verfahrens werden zusätzliche Schwächungen auch in den Dekorträger der Airbagabdeckung eingebracht, wobei diese Schwächungen nicht zwangsläufig mit den Schwächungen der Lederschicht korrespondieren müssen. Vielmehr kann durch eine derartige zusätzliche Schwächung des Dekorträgers das Aufreißverhalten der gesamten Airbagabdeckung sowie das Verhalten eines wegklappenden Bereichs der Airbagabdeckung im Auslösefall des Airbags vorteilhaft unterstützt werden.

In erfindungsgemäßer Weise kann das Eindringen dieses wenigstens einen Einschnitts auf eine Vielzahl dem Fachmann geläufiger Arten erfolgen. Insbesondere sind dabei Einschnitte bevorzugt, die in der Form zueinander ausgerichteter Sacklöcher mittig im vorab eingebrachten Schärfungsbereich vorliegen und somit die Lederschicht nicht vollständig durchdringen. Die Form dieser Sacklöcher ist wiederum in erfindungsgemäßer Weise nicht beschränkt und im Querschnitt länglich ausgerichtete Sacklöcher sind ebenso vom Erfindungsgedanken umfasst wie Sacklöcher oder Durchgangslöcher mit im Wesentlichen kreisrundem Querschnitt.

Ebenso ist die Form und Ausdehnung des Schärfungsbereichs im erfindungswesentlichen Sinne nicht beschränkt. Vorteilhaft ist selbstverständlich, wenn sich der Schärfungsbereich entlang der gesamten Aufreißlinie der Airbagabdeckung erstreckt. Ein vorteilhaftes Erscheinungsbild wird überdies dann gewährleistet, wenn der Übergang von ungeschärftem zu geschärftem Bereich im Querschnitt nicht mit schroffen Übergängen verwirklicht ist. Vielmehr wird eine Ausgestaltung bevorzugt, bei der der Übergang von nicht geschärftem zum Schärfungsbereich in einer Weise gestaltet ist, bei der Übergänge mit einem Kantenwinkel von > 90° verwirklicht sind. Dies kann beispielsweise dadurch erfolgen, dass der Schärfungsbereich in seinen Randbereichen abgeschrägte Flächen aufweist.

Im erfindungsgemäßen Verfahren ist die Airbagabdeckung als Verbund mehrerer Schichten ausgebildet, wobei zwischen der Lederschicht als Dekormaterial und einem im Wesentlichen formstabilen Dekorträger wenigstens eine Zwischenschicht angeordnet ist. Diese Zwischenschicht weist vorzugsweise einen Aufreißwiderstand auf, der deutlich geringer als der der Lederschicht ist, und besteht je nach den gewünschten Eigenschaften beispielsweise aus einem Textilvlies, einem Abstandsgewirke, einer Schaumschicht (beispielsweise aus Polyurethan) oder einer Folie. Hierdurch wird insbesondere die Haptik der gesamten Airbagabdeckung in nahezu beliebiger Weise einstellbar, wobei hier sowohl die Eindrucktiefe als auch der Verschiebewiderstand sowie das Eindrückverhalten der Airbagabdeckung bestimmbar wird. Bei der Verwendung einer im Wesentlichen gasdurchlässigen Zwischenschicht kann zudem eine Temperatureinstellung der Airbagabdeckung bewirkt werden und/oder die Abfuhr von Verbrennungs- oder Verdampfungsgasen beispielsweise bei Anwendung von Lasern zur Einbringung von Schwächungen realisiert werden.

In einer alternativen und ebenso bevorzugten Ausgestaltung der Erfindung weist der Schärfungsbereich die Form eines Teilkreises auf, wobei in diesem Fall ebenfalls ein sanfter Übergang von nicht geschärftem zum Schärfungsbereich verwirklicht werden kann. Dabei ist dem Fachmann bewusst, dass je größer der Radius dieses Teilkreises ist, desto sanfter auch der Übergang von nicht geschärftem zum Schärfungsbereich verwirklicht werden kann. Überaus bevorzugt wird eine Ausgestaltung, bei der der Übergang von nicht geschärftem zu geschärftem Bereich im Wesentlichen stetig ohne Ausbildung irgendwelcher Kanten verwirklicht wird. In einer weiteren Ausgestaltung der Erfindung ist die Lederschicht vollflächig geschwächt, das heißt, dass der Schärfungsbereich sich über die gesamte Fläche der Lederschicht erstreckt.

Es hat sich bei Anwendung des erfindungsgemäßen Verfahrens überraschenderweise herausgestellt, dass durch die Einbringung eines Schärfungsbereichs in das Leder und den damit einhergehenden zumindest partiellen Materialabtrag bis hin zu einer gewünschten Restdicke des Ledermaterials sowie ein daraufhin erfolgendes Einbringen von wenigstens einem Einschnitt in den vorab hergestellten Schärfungsbereich gerade in den Fällen, in denen Strahlverfahren zur Einbringung des oder der Einschnitte verwendet werden, der Energie- und/oder Materialeintrag durch das Strahlverfahren in die Lederschicht auf ein notwendiges Minimum beschränkt werden kann, so dass die Einschnitte mit sehr genau steuerbarer Geometrie und Tiefe hergestellt werden können. Darüber hinaus werden somit die Einflüsse auf die Umgebungsbereiche des Einschnitts auf ein Minimum begrenzt, so dass ein dauerhaft gleich bleibendes Erscheinungsbild des Lederdekors sichergestellt werden kann.

Die Restdicke der Lederschicht im Schärfungsbereich wird nach den vorliegenden Gegebenheiten, beispielsweise der Festigkeit des Ledermaterials, der Größe der Airbag-Treibladung oder der Länge des gewünschten Risses eingestellt. In einer bevorzugten Ausgestaltungsform des erfindungsgemäßen Verfahrens wird eine besonders vorteilhafte Abstimmung der erfindungswesentlichen Schritte jedoch dann erzielt, wenn die Restdicke der Lederschicht im Schärfungsbereich zwischen 0,15 und 0,6 mm beträgt. In einer besonders bevorzugten Ausgestaltung des erfindungsgemäßen Verfahrens beträgt die Restdicke der Lederschicht 0,15 bis 0,3 mm. Hierbei wird die Restdicke im Bereich des maximalen Abtrags bestimmt. Hierdurch wird ein Verfahren zur Verfügung gestellt, bei dem die Restdicke der Lederschicht eine ausreichende Stabilität und Reißfestigkeit beispielsweise bei mechanischer Belastung, die auf die Airbagabdeckung einwirken kann, gewährleistet ist und gleichzeitig in Kombination mit den Einschnitten in dem Schärfungsbereich eine sichere Entfaltung des Airbags entlang der gewünschten Aufreißlinie gewährleistet ist.

Der wenigstens eine Einschnitt kann durchgehend oder unter Ausbildung von Stegen zwischen einzelnen Einschnitten unterbrochen ausgestaltet sein. Darüber hinaus können mehrere Einschnitte oder ein einzelner Einschnitt auch so ausgestaltet oder zueinander ausgerichtet sein, dass der oder die Einschnitte den Schwächungsbereich kreuzen und somit nur teilweise innerhalb des Schwächungsbereichs angeordnet sind.

Eine derartige Ausgestaltung wäre beispielsweise dann verwirklicht, wenn die Einschnitte alternierend um die Haupterstreckungsrichtung des Schärfungsbereichs angeordnet sind und beispielsweise sinusförmig oder mäanderförmig verlaufend den Schärfungsbereich periodisch kreuzen. Ebenso ist eine Ausgestaltung vom Erfindungsgedanken umfasst, bei der die Einschnitte im Wesentlichen nur einseitig zur Haupterstreckungsrichtung des Schärfungsbereichs versetzt angeordnet sind und beispielsweise bei sinusförmiger Gestaltung der Einschnitte nur an jedem zweiten Scheitelpunkt der Kurve mit dem Schärfungsbereich zusammen treffen.

In jedem der oben genannten Fälle ist jedoch gewährleistet, dass die Geometrie der Einschnitte selbst oder deren relative Ausrichtung zueinander auf den Schärfungsbereich abgestimmt ist und der Schärfungsbereich in jedem dieser Fälle durch einen oder mehrere Einschnitte eine zusätzliche Schwächung erfährt.

Wie bereits eingangs erwähnt, ist die Einbringung des oder der Einschnitte nicht auf ein spezielles Verfahren beschränkt. In einer besonders bevorzugten Ausgestaltungsform des erfindungsgemäßen Verfahrens erfolgt die Einbringung der Einschnitte jedoch mittels eines auf die Rückseite der Lederschicht einwirkenden Wasserstrahls. Hierdurch wird ein Verfahren zur Verfügung gestellt, das zum einen besonders gut steuerbar ist, zum anderen besonders genau definiert feine Schnittgeometrien zulässt, bei denen darüber hinaus auch die Umgebungsbereiche im Wesentlichen nicht beeinträchtigt werden. Insbesondere wird bei Durchführung dieses bevorzugten Verfahrens eine Materialabdampfung und Aufschmelzung von Randbereichen des Einschnitts vollständig unterbunden. Es verbleibt somit eine partielle Schwächung in der erfindungsgemäßen Airbagabdeckung, die sich durch besonders genaue und feine Geometrien mit geringst möglichem Materialvolumenabtrag auszeichnet.

In einer alternativen und ebenso besonders bevorzugten Ausgestaltungsform des erfindungsgemäßen Verfahrens erfolgt die Einbringung des wenigstens einen Einschnitts in die vorab geschärfte Lederschicht jedoch mittels eines Laserstrahls, der von der Rückseite auf die Lederschicht auftrifft. Hierdurch wird ein Verfahren zur Verfügung gestellt, das ebenfalls besonders sicher und genau steuerbar ist und sehr kleine und klar definierte Einschnittsgeometrien gewährleistet.

In beiden oben genannten alternativen Ausführungsformen, sowohl der Einbringung der Einschnitte mittels Wasserstrahl als auch mittels Laserstrahl sind mit derzeit verfügbaren Vorrichtungen Perforierungen oder Sacklöcher innerhalb des Ledermaterials herstellbar, die einen Durchmesser im Bereich von 0,005 bis 0,1 mm aufweisen. Derartige Größenordnungen sind mit dem bloßen Auge nahezu nicht sichtbar und ermöglichen dennoch die gewünschte zusätzliche Schwächung der Lederschicht der Airbagabdeckung.

In einer besonders bevorzugten Ausgestaltungsform des erfindungsgemäßen Verfahrens wird die Dicke und Kontur der wenigstens einen Zwischenschicht so gewählt, dass hierdurch der Materialabtrag des Ledermaterials im Schärfungsbereich vollständig ausgeglichen wird. Im Ergebnis verbleibt eine Airbagabdeckung mit im Wesentlichen konstanter Dicke, wodurch gewährleistet werden kann, dass die Aufreißlinie in der Airbagabdeckung weder sichtbar noch fühlbar ist.

Gemäß einer weiteren vorteilhaften Ausbildung des erfindungsgemäßen Verfahrens wird die Lederschicht nach dem Einbringen des Schärfungsbereichs und vor dem Einbringen des wenigstens einen Einschnitts in geeigneter Weise vorbehandelt, wobei diese Vorbehandlung beispielsweise eine Versteifung des Ledermaterials im Schärfungsbereich zum Ziel haben kann. Eine derartige Vorbehandlung kann beispielsweise durch Aufsprühen eines geeigneten Agens vorzugsweise unter Auflage einer geeignet gestalteten Maske auf den zu behandelnden Bereich erfolgen.

In einer ebenso bevorzugten Ausgestaltungsform des erfindungsgemäßen Verfahrens erfolgt die Vorbehandlung durch Aufsprühen eines Farbmittels, durch das überaus bevorzugt auch eine Versteifung des behandelten Bereichs bewirkt werden kann. Durch das Farbmittel wird in jedem Fall das Transmissions- und Absorbtionsverhalten des Ledermaterials bei Verwendung eines Lasers zur Einbringung des wenigstens einen Einschnitts vorteilhaft verändert werden können. Ein derartiges Agens kann überdies auch einen unerwünschten Abbrand von den wenigstens einen Einschnitt umgebenden Randbereichen sicher unterbinden. In der Folge kann ein Einschnitt hergestellt werden, der genau definierte Geometrien und im Wesentlichen unbeeinflusste Randbereiche aufweist. In jedem Fall wird hierdurch die Optik der geschwächten Airbagabdeckung besonders vorteilhaft unterstützt und dauerhaft beibehalten.

Die Einbringung sowohl des Schärfungsbereichs als auch des wenigstens einen Einschnitts in den vorab hergestellten Schärfungsbereich kann mit dem Fachmann geläufigen Vorrichtungen bewirkt werden. Bevorzugt wird jedoch ein Verfahren, bei dem die Lederschicht zumindest zum Einbringen des wenigstens einen Einschnitts auf einer Aufnahme fixiert wird und somit eine Relativbewegung des Werkzeugs zur Einbringung des Einschnitts in Bezug auf die Lederschicht besonders sicher bewirkt werden kann. In einer besonders bevorzugten Ausgestaltungsform des Verfahrens wird die Lederschicht unter Einwirkung eines Vakuums auf einer geeigneten Aufnahme fixiert. Hierdurch wird ein besonders materialschonendes Verfahren zur Verfügung gestellt, das darüber hinaus eine sichere Fixierung und Lösung der Lederschicht ermöglicht.

Wie bereits oben erwähnt, kann die erfindungsgemäße bearbeitete Airbagabdeckung aus einer Vielzahl von Schichten bestehen, wobei sämtlichen Airbagabdeckungen gemeinsam ist, dass sie eine geschwächte Lederschicht als Dekormaterial aufweisen. In einer bevorzugten Ausgestaltungsform des erfindungsgemäßen Verfahrens wird die Airbagabdeckung nach dem Einbringen des Schärfungsbereichs sowie des wenigstens einen Einschnitts in die Lederschicht durch Aufkleben der Lederschicht auf den Dekorträger oder einen Verbund aus Dekorträger und einer oder mehreren Zwischenschichten hergestellt. Im Anschluss können dann weitere Schwächungen in den Verbund der Airbagabdeckung eingebracht werden, sofern dies zur Einstellung bestimmter Auslösecharakteristika gewünscht ist.

### Kurze Beschreibung der Zeichnungen

Die Erfindung wird im Nachfolgenden anhand einer Reihe von Figuren erläutert, die Airbagabdeckungen oder zumindest Teile hiervon darstellen. In den Figuren ist:
Figur 1 eine schematische Querschnittansicht durch einen Schärfungsbereich einer Lederschicht,
Figur 2a eine schematische Querschnittsansicht durch eine Airbagabdeckung ohne zusätzlich zu dem Einschnitt versetzt eingebrachte Schwächungen,
Figur 2b eine Draufsicht auf den Verlauf der Aufreißlinie in einer Instrumententafel, die die Airbagabdeckung aus Figur 2a trägt,
Figur 3a eine weitere Ausführungsform einer Airbagabdeckung, die unter Anwendung des erfindungsgemäßen Verfahrens hergestellt wurde, in einem schematischen Querschnitt,
Figur 3b eine Draufsicht auf einen Teil einer Instrumententafel, die den Verlauf von Schwächungsbereichen und der Aufreißlinie in der Airbagabdeckung gemäß Figur 3a zeigt,
Figur 4 eine schematische Querschnittsansicht einer Airbagabdeckung in einem ersten Stadium des Auslösens eines Airbags,
Figur 5a eine schematische Querschnittsansicht durch eine Lederschicht, in die zwei Schärfungsbereiche eingebracht wurden,
Figur 5b eine weitere schematische Querschnittsansicht einer Lederschicht, in die zwei Schärfungsbereiche eingebracht wurden,
Figur 6 eine weitere schematische Ansicht einer Instrumententafel mit dargestelltem Verlauf von Schwächungs- und Aufrisslinie,
Figur 7a eine schematische Querschnittsansicht durch eine weitere Airbagabdeckung ohne zusätzlich zu dem Einschnitt versetzt eingebrachte Schwächungen, und
Figur 7b eine Draufsicht auf einem Teil einer Instrumententafel, die den Verlauf der Aufreißlinie in der Abdeckung gemäß Figur 7a zeigt.

### Wege zur Ausführung der Erfindung

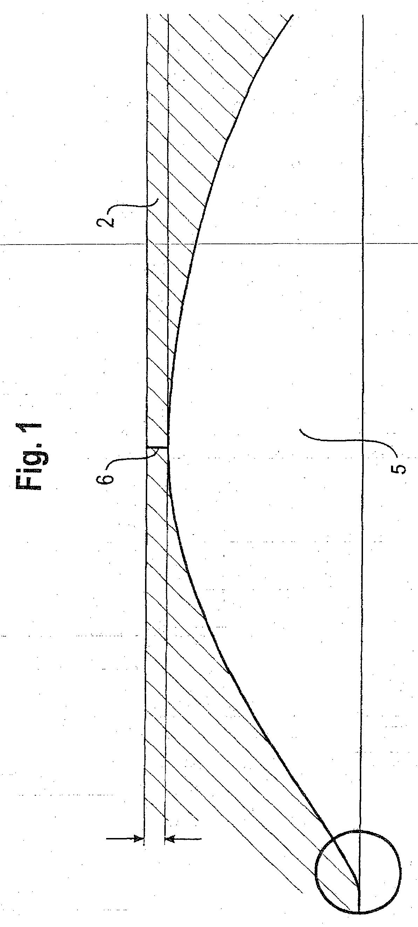

Figur 1 zeigt eine schematische Querschnittsansicht einer Lederschicht 2 für eine Airbagabdeckung 1, in die ein Schärfungsbereich 5 eingebracht wurde. Der Schärfungsbereich 5 zeichnet dabei einen Teilkreis nach und der Übergang von nicht geschärftem Bereich (links in der Figur, hervorgehoben durch den Kreis) zum Schärfungsbereich 5 kann sowohl stetig ohne Ausbildung einer Kante als auch mit einer hier überhöht dargestellt Kante verwirklicht sein. Die Restdicke der Lederschicht 2 beträgt in dieser Ausführungsform etwa 0,3 bis 0,6 mm und im Bereich der minimalen Restwandstärke oberhalb des Scheiteilpunkts des dargestellten Teilkreises ist ein Einschnitt 6 in die Lederschicht 2 eingebracht worden, der im Wesentlichen durch die gesamte Dicke der Rest-Lederschicht 2 hindurch verläuft.

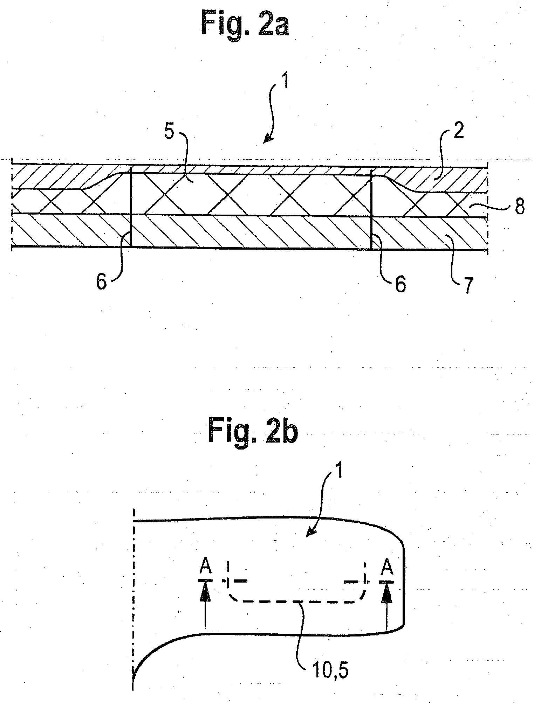

In Figur 2a ist eine schematische Querschnittsansicht einer Airbagabdeckung 1 dargestellt. In die Lederschicht 2 ist ein breiter Schärfungsbereich 5 in einer Weise eingebracht worden, dass der Übergang von nicht geschärftem Bereich der Lederschicht 2 (links und rechts in der Figur) zu dem zentral angeordneten Schärfungsbereich 5 mit zwei auf den Schärfungsbereich 5 hin geneigten Flächen ausgebildet ist. Der Übergang von nicht geschärftem Bereich zum Schärfungsbereich 5 erfolgt hierbei auf beiden Seiten spiegelsymmetrisch und mit einem Winkel deutlich größer als 90°. Die Lederschicht 2 ist auf einer Zwischenschicht 8 aus einem Abstandsgewirke aufgebracht, wobei die Dicke des Abstandsgewirkes 8 so gestaltet ist, dass sie mit der Querschnittsgeometrie der Lederschicht 2 korrespondiert und den Schwächungsbereich 5 vollständig in der Dicke ausgleicht. Somit kann durch Aufbringen des Teilverbunds aus Lederschicht 2 und Abstandsgewirke 8 auf dem Dekorträger 7 eine Airbagabdeckung 1 mit durchgehend konstanter Dicke hergestellt werden. In den Verbund aus Lederschicht 2, Abstandsgewirke 8 und Dekorträger 7 sind überdies von der Mitte des Schärfungsbereichs 5 zu den Seiten spiegelsymmetrisch versetzt angeordnete Einschnitte 6 eingebracht, die als Sackloch innerhalb der Lederschicht 2 enden und die Lederschicht 2 somit nicht vollständig durchdringen.

In Figur 2b wird eine Teilansicht einer Instrumententafel dargestellt, die mit einer Airbagabdeckung 1 überzogen ist. Innerhalb der Airbagabdeckung 1 ist eine Aufreißlinie 10 dargestellt, entlang derer der Schärfungsbereich 5 verläuft. Der Schnitt A-A, der in der Figur 2b dargestellt ist, kennzeichnet den Schnitt durch die Airbagabdeckung 1, der in Figur 2a dargestellt ist.

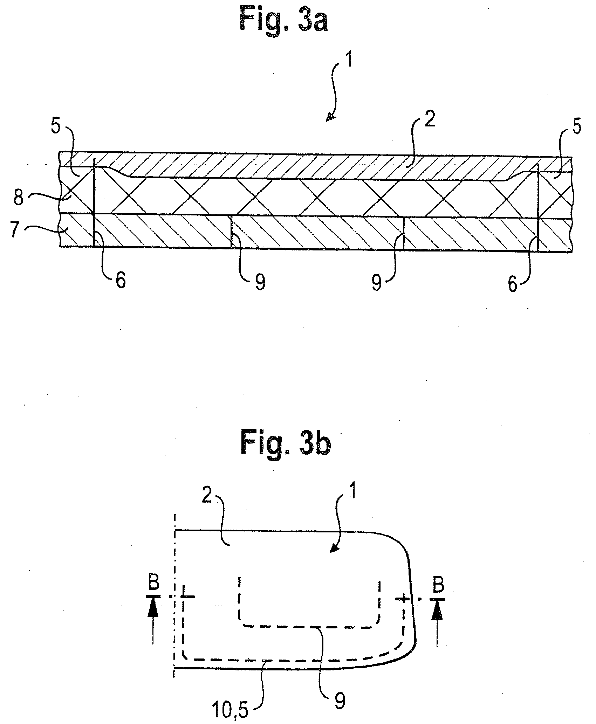

In Figur 3a ist eine weitere Airbagabdeckung 1 dargestellt, die unter Anwendung des erfindungsgemäßen Verfahrens hergestellt wurde. Die Airbagabdeckung 1 besteht analog zu der in Figur 2 dargestellten Ausführungsform aus einer Lederschicht 2 und einem Dekorträger 7, zwischen denen ein Abstandsgewirke als Zwischenschicht 8 angeordnet ist. Auch in diesem Fall ist die Querschnittsgeometrie des Abstandsgewirkes 8 so gewählt, dass die Materialabnahme der Lederschicht 2 im Bereich der Schärfung 5 vollständig ausgeglichen wird, um eine Airbagabdeckung 1 mit im Wesentlichen durchgehend konstanter Dicke zu erhalten. Die Schärfungsbereiche 5 sind in dieser Ausführungsform links und rechts spiegelsymmetrisch versetzt zur Mitte des dargestellten Bereichs innerhalb der Lederschicht 2 eingebracht, wobei auch in dieser Ausführungsform der Übergang vom nicht geschärften zum Schärfungsbereich 5 durch Ausbildung von schrägen Übergangsflächen verwirklicht ist. In dem Bereich maximaler Schärfung sind jeweils Einschnitte 6 in der Form von Sacklöchern in die Airbagabdeckung 1 eingebracht, welche durch den Dekorträger 7 sowie das Abstandsgewirke 8 hindurch verlaufen, das Ledermaterial 2 jedoch nicht vollständig durchdringen. Im Dekorträger 7 sind zur Mitte der dargestellten Airbagabdeckung 1 hin versetzt und unterhalb des nicht geschärften Bereichs der Lederschicht 2 zwei weitere Schwächungen 9 in den Dekorträger 7 eingebracht worden.

Figur 3b zeigt eine schematische Draufsicht auf die Airbagabdeckung 1 aus Figur 3a, wobei in Figur 3b der Schnitt B-B eingezeichnet ist, entlang dessen der Querschnitt aus Figur 3a genommen ist. Deutlich zu erkennen ist die U-förmig verlaufende Aufreißlinie 10, entlang derer der Schärfungsbereich 5 verläuft, sowie die ebenfalls U-förmig verlaufende und versetzt zur Aufreißlinie 10 angeordnet Trägerschwächung 9. Im Auslösefall eines (nicht dargestellten) Airbags reißt die Airbagabdeckung 1 entlang der Aufreißlinie 10 auf und durch die Schwächung 9 wird beim Wegklappen der Airbagabdeckung 1 ein Abknicken der Airbagabdeckung 1 entlang der Schwächung 9 bewirkt. Dabei erfolgt jedoch kein vollständiges Auf- oder Einreißen der gesamten Airbagabdeckung 1 und insbesondere der Lederschicht 2 entlang der Schwächung 9.

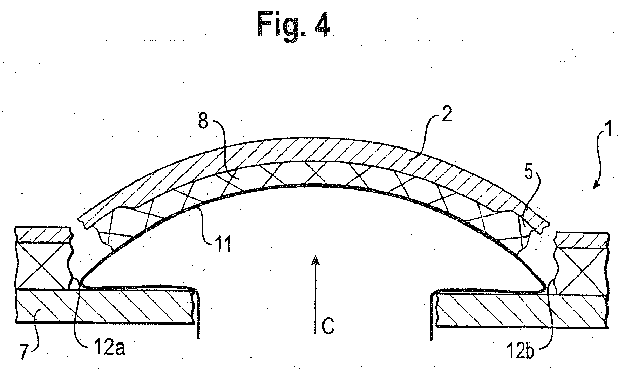

In Figur 4 ist eine schematische Seitenansicht einer Airbagabdeckung 1 in einem Fall dargestellt, bei dem der Airbag 11 in einem ersten Stadium seiner Auslösung gezeigt ist. Eine (nicht dargestellte) Treibladung bewirkt eine Ausbreitung des Airbags 11 im Wesentlichen in Richtung des Pfeils C, somit gegen die Unterseite der Airbagabdeckung 1 gerichtet. Die vom Airbag 11 auf die Airbagabdeckung 1 einwirkende Kraft bewirkt ein Auseinanderreißen der Airbagabdeckung 1 im Schärfungsbereich 5 der Lederschicht 2. Das auch hier zwischen dem Dekorträger 7 und der Lederschicht 2 eingebrachte Abstandsgewirke 8 übt keine wesentliche Widerstandskraft gegen die Airbagentfaltung aus und reißt ebenfalls vollständig entlang der dargestellten Aufreißlinien 12a, 12b auf. Die Lederschicht 2 sowie das darunter angeordnete Abstandsgewirke 8 verformen sich der Außenkontur des Airbags 11 folgend und klappen mit einer gekrümmten Oberfläche aus der Airbagabdeckung 1 aus.

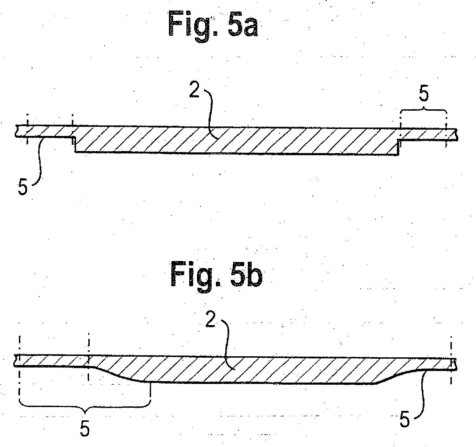

In Figur 5a ist eine erste Ausführungsform einer Lederschicht 2 mit einem Schärfungsbereich 5 dargestellt, wobei hier der Übergang von Schärfungsbereich 5 zum nicht geschärften Bereich (mittig in der Figur) der Lederschicht 2 gestuft unter im Wesentlichen 90°-Winkeln ausgebildet ist.

In Figur 5b wird eine weitere Ausführungsform einer Lederschicht 2 dargestellt, in der die Übergänge vom nicht geschärften Bereich (mittig in der Figur) zu den Schärfungsbereichen 5 (links und rechts in der Figur) im Wesentlichen stetig und nur unter Ausbildung schwach ausgeprägter Kanten verwirklicht ist. Deutlich wird hierbei im Vergleich zu der in Figur 5a dargestellten Ausführungsform die deutliche Verbreiterung des gesamten Schärfungsbereichs im Vergleich zur gestuften Ausführungsform.

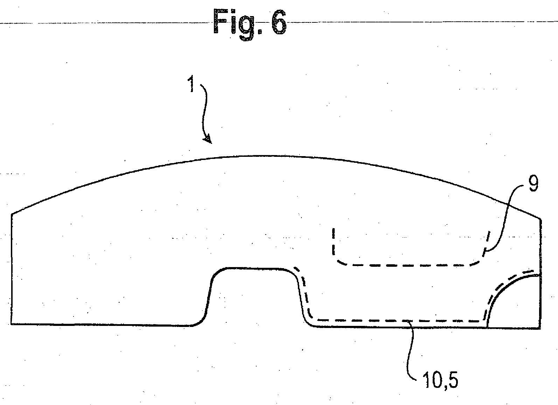

In Figur 6 ist eine weitere Ausführungsform einer Instrumententafel dargestellt, die mit einer nach einem erfindungsgemäßen Verfahren bearbeiteten Airbagabdeckung 1 bezogen ist. Mittig ist analog zu der Ausführungsform gemäß Figur 3b eine U-förmige Schwächung innerhalb des Dekorträgers (nicht dargestellt) eingebracht, die jedoch nicht durch die gesamte Airbagabdeckung 1 hindurch verläuft. Unterhalb dieser Schwächung 9 im (nicht dargestellten) Dekorträger ist eine Aufreißlinie 10 angeordnet, entlang derer der Schärfungsbereich 5 verläuft und entlang derer das Aufreißen der gesamten Airbagabdeckung 1 im Auslösefall des (nicht dargestellten) Airbags erfolgt. Der Verlauf dieser Aufreißlinie 10 ist hierbei im Wesentlichen durch die Außenkontur der Instrumententafel 1 vorgegeben und verläuft im Wesentlichen äquidistant zu den Abschlusskanten der Instrumententafel zur Mittelkonsole (links), zur unteren Abschlusskante der Instrumententafel (unten) sowie im Übergangsbereich zu einer (nicht dargestellten) Seitenlüftung (rechts in der Figur).

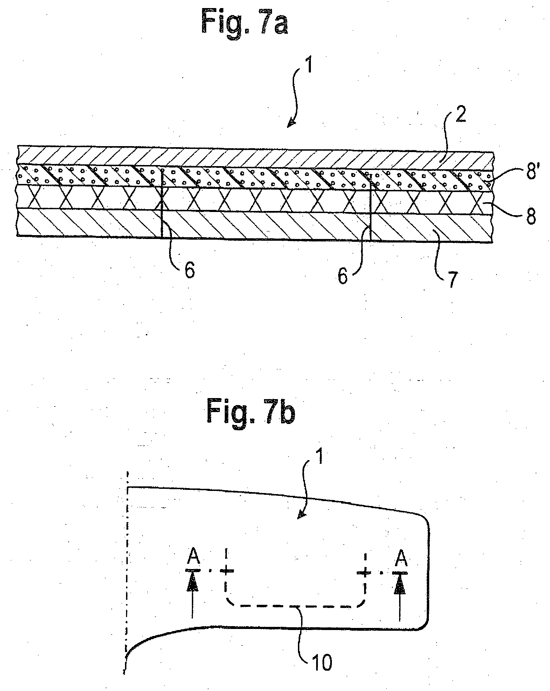

In Figur 7a wird eine weitere Airbagabdeckung 1 im schematischen Querschnitt entlang der Linie A-A aus Figur 7b dargestellt. Die hier dargestellte Airbagabdeckung 1 besteht aus einem Schichtverbund, umfassend einen Dekorträger 7 und eine auf der Sichtseite der Airbagabdeckung 1 angebrachte Lederschicht 2. Diese Lederschicht 2 ist vollflächig geschwächt, so dass sich ihr Schärfungsbereich auf die hier dargestellte Gesamtfläche der Lederschicht 2 erstreckt. Zwischen der Lederschicht 2 und dem Dekorträger 7 sind zudem eine Schicht 8 aus Abstandsgewirke und eine darüber angeordnete zusätzliche Schaumschicht 8' aus Polyurethan angeordnet, wobei durch den Verbund aus Abstandsgewirke 8 und Schaumschicht 8' die Haptik der Airbagabdeckung 1 vorteilhaft eingestellt wird. In den Verbund der Airbagabdeckung 1 sind mittels Laser zwei zueinender parallel verlaufende und senkrecht zur Flächenerstreckung der Airbagabdeckung 1 ausgerichtete Einschnitte 6 eingebracht, die zudem eine gleiche Länge aufweisen. Die Einschnitte 6 verlaufen jeweils durch den Dekorträger 7 und die Schicht 8 aus Abstandsgewirke hindurch und enden innerhalb der Schaumschicht 8', somit unterhalb der Lederschicht 2. Das Abstandsgewirke der Schicht 8 kann hierbei sowohl zum Abtransport von Verbrennungsgasen als auch zur Zufuhr von Inertgasen oder dergleichen dienen. Die Schaumschicht 8' aus Polyurethan bietet wiederum besonders vorteilhafte Eigenschafts-Kombinationen in Verbindung mit dem Einbringen der Einschnitte 6 durch Laser.

In Figur 7b ist ein Teil der Instrumententafel dargestellt, der mit der Airbagabdeckung 1 aus Figur 7a vollständig bedeckt ist. Figur 7b ist auch der im Wesentlichen U-förmige Verlauf der Aufreißlinie C zu entnehmen, deren Schnitt entlang der Linie A-A in Figur 7a dargestellt ist.

## Patentansprüche

1. Verfahren zur Herstellung einer eine Lederschicht (2), einen Dekorträger (7) sowie wenigstens eine zwischen Lederschicht (2) und Dekorträger (7) angeordnete Zwischenschicht (8) aufweisenden Airbagabdeckung (1), insbesondere zur Verwendung in einem Kraftfahrzeug, mit einer partiellen Schwächung (3) zur Einleitung eines Risses und/oder dessen Ausbreitung entlang einer vorab definierten Strecke (4), umfassend die folgenden Schritte:
- Einbringen eines Schärfungsbereichs (5) in die Lederschicht (2), **gekennzeichnet durch**
- Einbringen wenigstens eines Einschnitts (6) in den vorab hergestellten Schärfungsbereich (5) und Einbringen zusätzlicher Schwächungen (9) in den Dekorträger (7), die versetzt zu dem wenigstens einen Einschnitt (6) angeordnet sind.

2. Verfahren gemäß Anspruch 1, **dadurch gekennzeichnet, dass** die Restdicke der Lederschicht (2) im
Schärfungsbereich (5) zwischen 0,15 und 0,6 mm, vorzugsweise 0,15 bis 0,3 mm beträgt.

3. Verfahren gemäß einem der voranstehenden Ansprüche,
**dadurch gekennzeichnet, dass** der Übergang vom nicht geschärften zum Schärfungsbereich (5) in der Lederschicht stetig oder abgestuft ausgebildet wird.

4. Verfahren gemäß einem der voranstehenden Ansprüche,
**dadurch gekennzeichnet, dass** der wenigstens eine Einschnitt (6) zumindest teilweise außerhalb des Schärfungsbereichs (5) eingebracht wird.

5. Verfahren gemäß einem der voranstehenden Ansprüche, **dadurch gekennzeichnet, dass** der wenigstens eine Einschnitt (6) als Sackloch oder Abfolge von vorzugsweise zueinander ausgerichtet angeordneten Sacklöchern ausgebildet wird.

6. Verfahren gemäß einem der Ansprüche 1 bis 5, **dadurch gekennzeichnet, dass** der wenigstens eine Einschnitt (6) als Durchgangloch oder Abfolge von vorzugsweise zueinander ausgerichtet angeordneten Durchgangslöchern ausgebildet wird.

7. Verfahren gemäß einem der voranstehenden Ansprüche, **dadurch gekennzeichnet, dass** der wenigstens eine Einschnitt (6) mittels eines Wasserstrahls in die Lederschicht (2) eingebracht wird.

8. Verfahren gemäß einem der Ansprüche 1 bis 6, **dadurch gekennzeichnet, dass** der wenigstens eine Einschnitt (6) mittels eines Laserstrahls in die Lederschicht eingebracht wird.

9. Verfahren gemäß einem der voranstehenden Ansprüche, **dadurch gekennzeichnet, dass** die Lederschicht (2) nach dem Einbringen des Schärfungsbereichs (5) und vor dem Einbringen des wenigstens einen Einschnitts (6) mit der Airbagabdeckung (1) verbunden wird.

10. Verfahren gemäß einem der voranstehenden Ansprüche, **dadurch gekennzeichnet, dass** der wenigstens eine Einschnitt (6) durch den Dekorträger (7) und die wenigstens eine Zwischenschicht (8) verläuft.

11. Verfahren gemäß einem der vorangehenden Ansprüche,
**dadurch gekennzeichnet, dass** die Dicke und Kontur der Zwischenschicht(en) (8) so gewählt wird, dass die Dicke der Airbagabdeckung (1) im Wesentlichen konstant ist.

12. Verfahren gemäß einem der vorangehenden Ansprüche,
**dadurch gekennzeichnet, dass** wenigstens eine Zwischenschicht (8) eine Schaumschicht (8') aus Polyurethan ist.

13. Verfahren gemäß einem der voranstehenden Ansprüche,
**dadurch gekennzeichnet, dass** nach dem Einbringen des Schärfungsbereichs (5) und vor dem Einbringen des Einschnitts (6) die Lederschicht (2) behandelt wird.

14. Verfahren gemäß einem Anspruch 13, **dadurch gekennzeichnet, dass** die Behandlung das Aufsprühen eines Agens umfasst, durch das Einbringen des Einschnitts (6) unterstützt wird.

15. Verfahren gemäß einem der Ansprüche 13 und 14, **dadurch gekennzeichnet, dass** die Behandlung eine Versteifung des Bereichs für die Einbringung des Einschnitts (6) bewirkt.

16. Verfahren gemäß einem der Ansprüche 13 bis 15, **dadurch gekennzeichnet, dass** die Behandlung das Aufbringen eines Farbmittels umfasst.

17. Verfahren gemäß einem der voranstehenden Ansprüche,
**dadurch gekennzeichnet, dass** die Lederschicht (2) zumindest zum Einbringen des wenigstens einen Einschnitts (6) vorzugsweise unter Aufbringung eines auf die Lederschicht (2) einwirkenden Vakuums auf einer Aufnahme fixiert wird.

18. Verfahren gemäß Anspruch 17, **dadurch gekennzeichnet, dass** die Airbagabdeckung (1) nach dem Einbringen des Schärfungsbereichs (5) sowie des wenigstens einen Einschnitts (6) durch Verkleben der einzelnen Schichten (2, 7, 8) zusammengesetzt wird.

## Claims

1. Method for producing an airbag covering (1) having a leather layer (2), a decoration support (7) and at least one intermediate layer (8) arranged between leather layer (2) and decoration support (7), in particular for use in a motor vehicle, with a partial weakening (3) for introducing a tear and/or for the propagation of the latter along a previously defined section (4), comprising the following steps:
- introducing a sharpening region (5) into the leather layer (2), **characterized by**
- introducing at least one incision (6) into the previously produced sharpening region (5) and introducing additional weakenings (9) into the decoration support (7), said weakenings being arranged offset with respect to the at least one incision (6).

2. Method according to Claim 1, **characterized in that** the residual thickness of the leather layer (2) in the sharpening region (5) is between 0.15 and 0.6 mm, preferably 0.15 to 0.3 mm.

3. Method according to either of the preceding claims, **characterized in that** the transition from the non-sharpened region to the sharpening region (5) in the leather layer is formed in a continuous or stepped manner.

4. Method according to one of the preceding claims, **characterized in that** the at least one incision (6) is at least partially introduced outside the sharpening region (5).

5. Method according to one of the preceding claims, **characterized in that** the at least one incision (6) is designed as a blind hole or a sequence of blind holes preferably arranged in a manner aligned with one another.

6. Method according to one of Claims 1 to 5, **characterized in that** the at least one incision (6) is designed as a passage hole or as a sequence of passage holes preferably arranged in a manner aligned with one another.

7. Method according to one of the preceding claims, **characterized in that** the at least one incision (6) is introduced into the leather layer (2) by means of a waterjet.

8. Method according to one of Claims 1 to 6, **characterized in that** the at least one incision (6) is introduced into the leather layer by means of a laser beam.

9. Method according to one of the preceding claims, **characterized in that** the leather layer (2) is connected to the airbag covering (1) after the sharpening region (5) is introduced and before the at least one incision (6) is introduced.

10. Method according to one of the preceding claims, **characterized in that** the at least one incision (6) runs through the decoration support (7) and the at least one intermediate layer (8).

11. Method according to one of the preceding claims, **characterized in that** the thickness and contour of the intermediate layer(s) (8) are selected in such a manner that the thickness of the airbag covering (1) is substantially constant.

12. Method according to one of the preceding claims, **characterized in that** at least one intermediate layer (8) is a foam layer (8') made of polyurethane.

13. Method according to one of the preceding claims, **characterized in that** the leather layer (2) is treated after the sharpening region (5) is introduced and before the incision (6) is introduced.

14. Method according to Claim 13, **characterized in that** the treatment comprises the spraying-on of an agent and is assisted by the introduction of the incision (6).

15. Method according to either of Claims 13 and 14, **characterized in that** the treatment causes stiffening of the region for the introduction of the incision (6).

16. Method according to one of Claims 13 to 15, **characterized in that** the treatment comprises the application of a dye.

17. Method according to one of the preceding claims, **characterized in that** the leather layer (2) is secured on a receptacle, at least for the introduction of the at least one incision (6), preferably by applying a vacuum which acts on the leather layer (2).

18. Method according to Claim 17, **characterized in that**, after the sharpening region (5) and the at least one incision (6) are introduced, the airbag covering (1) is assembled by adhesive bonding of the individual layers (2, 7, 8).

## Revendications

1. Procédé de fabrication d'un couvercle de sac gonflable (1) présentant une couche de cuir (2), une couche décorative (7) ainsi qu'au moins une couche intermédiaire (8) disposée entre la couche de cuir (2) et la couche décorative (7), à utiliser notamment dans un véhicule automobile, comportant un affaiblissement partiel (3) pour induire une fissure et/ou sa propagation le long d'un trajet (4) préalablement défini, comprenant les étapes suivantes :
- ménager une zone d'affilage (5) dans la couche de cuir (2), **caractérisé par**
- ménager au moins une découpe (6) dans la zone d'affilage (5) préalablement fabriquée et ménager des affaiblissements supplémentaires (9) dans la couche décorative (7), qui sont disposés en décalage par rapport à l'au moins une découpe (6).

2. Procédé selon la revendication 1, **caractérisé en ce que** l'épaisseur résiduelle de la couche de cuir (2) dans la zone d'affilage (5) est comprise entre 0,15 et 0,6 mm, de préférence 0,15 et 0,3 mm.

3. Procédé selon une des revendications précédentes, **caractérisé en ce que** la transition de la zone non affilée à la zone d'affilage dans la couche de cuir (2) est réalisée en continu ou graduellement.

4. Procédé selon une des revendications précédentes, **caractérisé en ce que** l'au moins une découpe (6) est ménagée au moins partiellement à l'extérieur de la zone d'affilage (5).

5. Procédé selon une des revendications précédentes, **caractérisé en ce que** l'au moins une découpe (6) est réalisée comme un alésage oblong ou une séquence d'alésages oblongs disposés de préférence en alignement les uns par rapport aux autres.

6. Procédé selon une des revendications 1 à 5, **caractérisé en ce que** l'au moins une découpe (6) est réalisée comme un orifice traversant ou une séquence d'orifices traversants disposés de préférence en alignement les uns par rapport aux autres.

7. Procédé selon une des revendications précédentes, **caractérisé en ce que** l'au moins une découpe (6) est ménagée au moyen d'un jet d'eau dans la couche de cuir (2).

8. Procédé selon une des revendications 1 à 6, **caractérisé en ce que** l'au moins une découpe (6) est ménagée au moyen d'un rayon laser dans la couche de cuir.

9. Procédé selon une des revendications précédentes, **caractérisé en ce que** la couche de cuir (2) est reliée après avoir ménagé la zone d'affilage (5) et avant d'avoir ménagé l'au moins une découpe (6) avec le couvercle de sac gonflable (1).

10. Procédé selon une des revendications précédentes, **caractérisé en ce que** l'au moins une découpe (6) s'étend à travers la couche décorative (7) et l'au moins une couche intermédiaire (8).

11. Procédé selon une des revendications précédentes, **caractérisé en ce que** l'épaisseur et le contour de la/des couche(s) intermédiaire(s) (8) sont sélectionnés de telle sorte que l'épaisseur du couvercle de sac gonflable (1) soit essentiellement constante.

12. Procédé selon une des revendications précédentes, **caractérisé en ce qu'**au moins une couche intermédiaire (8) est une couche de mousse (8') en polyuréthane.

13. Procédé selon une des revendications précédentes, **caractérisé en ce que** la couche de cuir (2) est traitée après avoir ménagé la zone d'affilage (5) et avant d'avoir ménagé la découpe (6).

14. Procédé selon la revendication 13, **caractérisé en ce que** le traitement comprend la pulvérisation d'un agent, par l'intermédiaire duquel la réalisation de la découpe (6) est assistée.

15. Procédé selon une des revendications 13 et 14, **caractérisé en ce que** le traitement provoque une rigidification de la zone prévue pour ménager la découpe (6).

16. Procédé selon une des revendications 13 à 15, **caractérisé en ce que** le traitement comprend l'application d'un colorant.

17. Procédé selon une des revendications précédentes, **caractérisé en ce que** la couche de cuir (2) est fixée sur un réceptacle au moins afin de ménager l'au moins une découpe (6) de préférence en appliquant un vide agissant sur la couche de cuir (2).

18. Procédé selon la revendication 17, **caractérisé en ce que** le couvercle de sac gonflable (1) est assemblé par collage des couches individuelles (2,7,8) après avoir ménagé la zone d'affilage (5) ainsi que l'au moins une découpe (6).
